# EUROPÄISCHE PATENTSCHRIFT

(11) **EP 0 803 475 B1**
(45) Veröffentlichungstag und Bekanntmachung des Hinweises auf die Patenterteilung: **11.12.2002**
(21) Anmeldenummer: 97103338.6
(22) Anmeldetag: 28.02.1997
(51) Int. Cl.: C02F 3/20, B01F 3/04

(54) **Belüftungsvorrichtung**
Aerator
Aérateur

(30) Priorität: 26.04.1996 DE 29607577 U
(43) Veröffentlichungstag der Anmeldung: 29.10.1997
(73) Patentinhaber: SCHÜSSLER, Karl-Heinz, D-61348 Bad Homburg v. d. Höhe (DE)
(72) Erfinder: SCHÜSSLER, Karl-Heinz, D-61348 Bad Homburg v. d. Höhe (DE)
(74) Vertreter: KEIL & SCHAAFHAUSEN

(56) Entgegenhaltungen:
- EP-A- 0 482 332
- US-A- 3 880 965
- US-A- 5 059 358

## Beschreibung

Die Erfindung bezieht sich auf eine Begasungsvorrichtung nach dem Oberbegriff des Anspruchs 1.

Bei bekannten Begasungsvorrichtungen (vgl. EP-A-0 482 332) sind verhältnismäßig kurze Grundkörper mit einer elastischen, perforierten Membran umgeben, durch deren Perforation bei Beaufschlagung über Öffnungen im Grundkörper Gas feinperlig in die zu begasende Flüssigkeit verteilt wird und welche im nichtbeaufschlagten Zustand den Grundkörper eng umschließt. Dabei sind zahlreiche Grundkörper über Verbindungselemente mit einem Druckgaszuführungsrohr über dessen Länge verteilt verbunden, über welches das Druckgas zwischen den eine geschlossene Wandung aufweisenden Grundkörper und der auf diesem gehaltenen Membran geführt. Die Grundkörper selbst sind stirnseitig offen und umschließen einen Flutraum, um dem Auftrieb der Begasungsvorrichtung entgegenzuwirken. Derartige Begasungsvorrichtungen erfordern einen hohen Montageaufwand für die Vielzahl von an den Gasverteilungsrohren quer befestigten Grundkörpern.

Aus der DE-A-3 226 065 ist ein Rohr zum Belüften von Abwasser bekannt, bei welchem sich auf einem perforierten Stützrohr ein fein perforierter Mantel aus Gummi oder dergleichen, der vorzugsweise mit feinen Schlitzen zum Durchtritt der Druckluft ausgestattet ist, befindet. Um zu erreichen, dass die an einem Ende des Schlauches zugeführte Druckluft gleichmäßig aus den Schlitzen des Mantels austreten kann, befindet sich zwischen dem Stützrohr und dem Mantel ein perforiertes Rohr, das nach Art eines Spiralschlauches geformt ist. Damit sich der Mantel nicht in die außen gelegenen Wellungen des Rohres eindrücken kann, ist das gewellte Rohr noch mit einem Gewebe überzogen, das vorzugsweise als Schlauchgewebe ausgeführt ist.

Aus der US-A-5 059 358 ist eine Begasungsvorrichtung für die Behandlung von Abwasser bekannt, die ein Verteilungsrohr als Stützkörper für eine diesen umgebende feinporige Membran umfasst. Durch die Poren der Membran wird bei Beaufschlagung über Öffnungen im Verteilungsrohr das Gas blasenförmig in dem Abwasser verteilt. Zum Verschließen eines offenen Endes des Verteilerrohres ist ein entfernbarer Stopfen vorgesehen, der entlang der Länge des Rohres im Inneren des Rohres platziert werden kann. Durch den verstellbaren Stopfen ist das innere Volumen des Rohres und somit eine Auftriebskraft des Rohres in dem Abwasser veränderbar. Bei der bekannten Begasungsvorrichtung sind Mittel zu Kondensatabführung nicht vorgesehen.

Aus der US-A-3 880 965 ist eine Begasungsvorrichtung bekannt, bei der Luft aus einem flexiblen und teilweise gasdurchlässigen Verteilungsschlauch in eine Flüssigkeit eingeleitet wird. Der Verteilungsschlauch ist in der Flüssigkeit über Befestigungselemente an einer Befestigungsfläche gehalten. Aufgrund des Auftriebs des Schlauchs in der Flüssigkeit nimmt der Schlauch zwischen zwei Befestigungselementen eine gebogene Form ein. Der gebogene Schlauch bildet eine Drainage für sich innerhalb des Schlauchs ansammelndes Kondensat aus. Das Kondensat fließt dabei zu den Enden des Schlauchs, an denen das Kondensat über Ventile abgelassen werden kann. Zur Verstärkung der Schlauchwandung kann eine Innenseite des Schlauchs fest mit einem feinporigen Nylongewebe verbunden sein.

Aufgabe der vorliegenden Erfindung ist es, eine Begasungsvorrichtung der eingangs benannten Art so weiterzubilden, dass das sich in ihr ansammelnde Kondensat auf einfache und zuverlässige Weise abgeführt werden kann.

Diese Aufgabe wird erfindungsgemäß im oberen Drittel des bei einer Begasungsvorrichtung der eingangs genannten Art mit den Mitteln des Anspruchs 1 gelöst.

Auf diese Weise ist es möglich, der zu begasenden Flüssigkeit über die gesamte und in Anpassung an die Abmessungen eines Abwasserbeckens beliebig vergrößerbare Länge des Stützkörpers das Begasungsgas zuzuführen, während andererseits die einfache Möglichkeit besteht, sich in der Begasungsvorrichtung ansammelndes Kondensat abzuführen. Die Montage der erfundenen Belüftungsvorrichtung ist zudem denkbar einfach. An den Gaszufuhrstutzen braucht lediglich ein Gaszufuhrschlauch angeschlossen zu werden. Die sich an den Ablaßstutzen des Kondensats anschließende Kondensatablaßleitung weist entweder ein gesteuert oder selbsttätig öffenbares Ventil auf und/oder die Ablaßleitung ist über den Wasserspiegel nach oben geführt.

Dem Auftrieb der Begasungsvorrichtung kann beispielsweise dadurch begegnet worden, daß sich in dem Stützkörper z.B. koaxial unter Bildung eines z.B. ringförmigen Gasraumes ein z.B. von einem flexiblen Schlauch gebildetes Flutraumbegrenzungsrohr befindet, welches einen gegenüber dem Gasraum geschlossenen Mantel hat, z.B. an seinen Enden stirnseitig offen ist und z.B. an seinen Enden zum Einschluß des Gasraumes zwischen dem Stützkörper und dem Flutraumbegrenzungsrohr eine Dichtung vorgesehen ist; auch diese Begasungsvorrichtung ist beliebig verlängerbar.

Ein weiterer Erfindungsgedanke besteht darin, die Länge des Gasraums relativ zu dem Flutraum veränderbar zu machen, um für jedes Abwasserbecken optimale Begasungsleistungen einstellen zu können.

Dies kann z.B. dadurch verwirklicht sein, daß das Flutraumbegrenzungsrohr nur über einen Teil der Länge des Stützrohrs verläuft oder die Dichtungen zwischen Stützkörper und Flutraumbegrenzungsrohr axial verstellbar sind, oder sich an den mittleren Gasraum äußere Fluträume anschließen und der Gasraum von den Fluträumen durch axial verstellbare Dichtungen abgetrennt ist, oder die Dichtungen auf einer axialen Gewindestange gehalten sind, oder die Dichtungen als Stopfen aus elastischem Material z.B. mit äußeren Gewindebohrungen ausgebildet sind.

Um einerseits zu verhindern, daß die zu begasende Flüssigkeit in den Gasraum des Stützkörpers eindringen kann, andererseits aber den Gasaustritt und den Kondensatabfluß zu gestatten, kann die Membran im Bereich der Kondensateinlaßöffnungen und der Gasaustrittsöffnungen nicht perforiert sein.

Bei einer praktischen Ausgestaltung der Erfindung ist es ferner von Vorteil, insbesondere wenn die Begasungsvorrichtung große Längen einnimmt, daß die Membran mittels axial verstellbarer flexibler Manschetten auf dem Stüztkörper und an ihren Enden mittels festliegender Halteschellen gehalten ist. Auf diese Weise kann die Möglichkeit des Aufwölbens der Membran bei Druckgasbeaufschlagung und damit das Blasenbild gezielt eingestellt werden.

Erfindungsgemäß ist insbesondere vorgesehen, daß die Gausaustrittsöffnungen im unteren Drittel des Gasraums liegen; die Gasaustrittsöffnungen können dabei bis zu 180° zu den Kondensateinlaßöffnungen versetzt sein.

Für bestimmte Strömungsverhältnisse ist es von Vorteil, wenn die Gasaustrittsöffnungen mit der Gaszufuhröffnung auf einer horizontalen Ebene liegen.

Die Begasungsvorrichtung ist vorzugsweise so hinsichtlich der Lage und der Größe der Gasaustrittsöffnungen ausgebildet, daß der Gasraum von der Gaszufuhröffnung zu dessen Enden hin in Längsrichtung bei konstanter Luftzufuhr mit konstanter oder abnehmender Gasgeschwindigkeit durchströmbar ist, um bestimmte Begasungsverhältnisse zu erhalten.

In besonderen Fällen können Gaszufuhröffnungen und Kondensataustrittsöffnungen von ein und derselben Öffnung in der Wandung des Stützkörpers gebildet sein.

Der Gasraum ist dabei bevorzugt mit einer Gasgeschwindigkeit von 0 bis 50 m/s, vorzugsweise 10 bis 20 m/s, durchströmbar.

Das Kondensat soll vorzugsweise mittels Druckluft oder Saugluft aus dem Gasraum abführbar sein.

In praktischer Ausgestaltung der Erfindung ist vorgesehen, daß der Gaszufuhröffnung ein z.B. mittels einer Schelle auf dem Stützrohr gehaltener Zufuhrstutzen zugeordnet ist.

Ähnlich kann der Kondensataustrittsöffnung ein z.B. mittels einer Schelle auf dem Stützrohr gehaltener Ablaßstutzen zugeordnet sein. Auch dies vereinfacht die Montage einer solchen Begasungsvorrichtung.

Sofern der Gasraum in dem Stützrohr nicht durch Abdichtung gegen den Flutraum stirnseitig geschlossen ist, kann der Stützkörper an seinen stirnseitigen Enden mittels Kappen geschlossen sein.

Von Vorteil ist es ferner, wenn der Kondensataustrittsöffnung ein unter Druck öffenbares Auslaßventil nachgeschaltet ist.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.
- Fig. 1: Schematisch im Längsschnitt eine die Erfindung aufweisende Begasungsvorrichtung,
- Fig. 1a, 1b und 1c: Querschnittsdarstellungen der Begasungsvorrichtung gemäß Fig. 1 entsprechend den Schnittlinien A-B, C-D bzw. E-F,
- Fig. 2: den Längsschnitt einer anderen Ausführungsform der erfindungsgemäßen Begasungsvorrichtung,
- Fig. 2a: einen Querschnitt der Begasungsvorrichtung gemäß Fig. 2 entlang der Schnittlinie G-H,
- Fig. 3: den Längsschnitt einer noch weiteren Ausgestaltung der erfindungsgemäßen Begasungsvorrichtung,
- Fig. 3a: einen Querschnitt der Begasungsvorrichtung gemäß Fig. 3 entlang der Schnittlinie I-J,

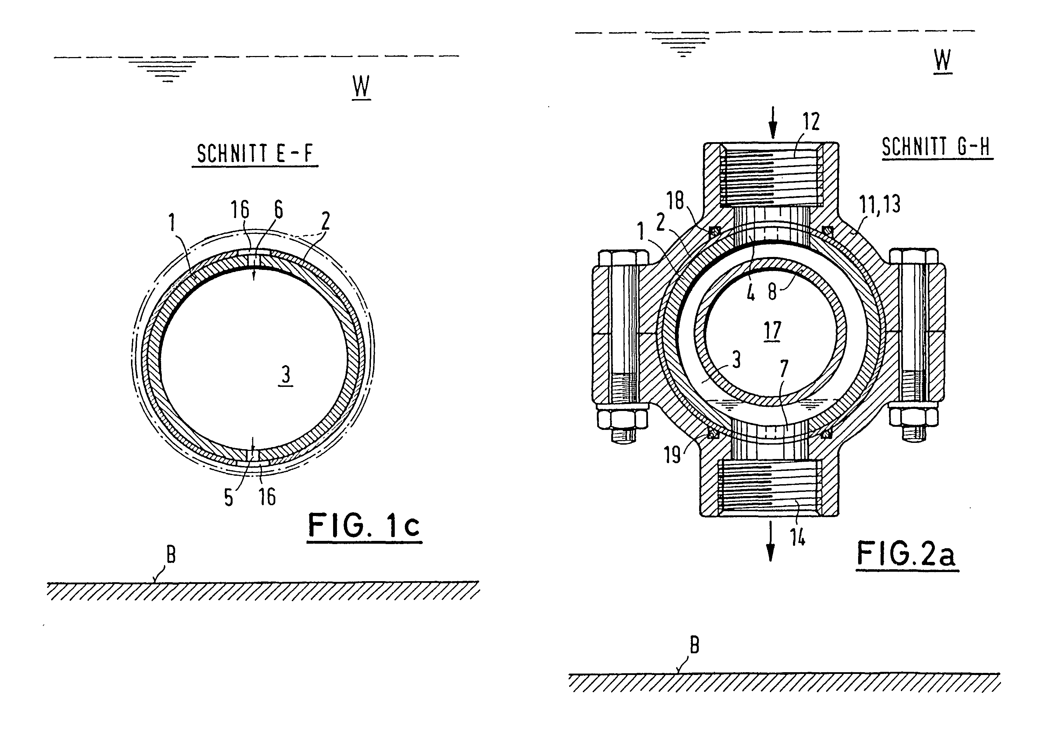

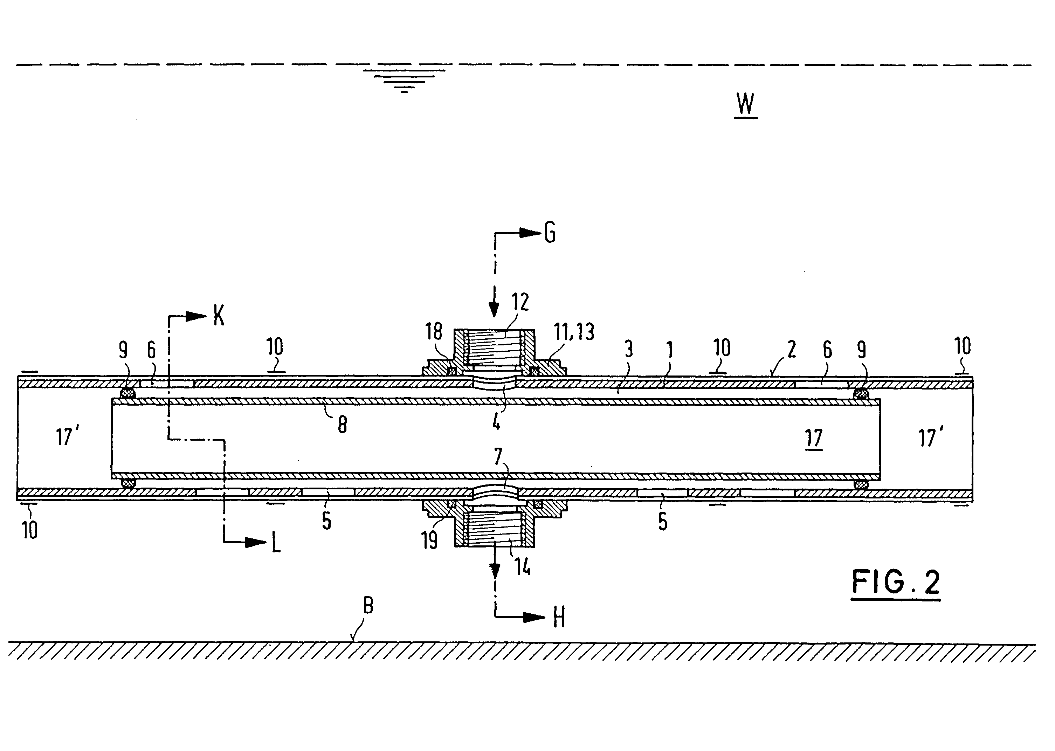

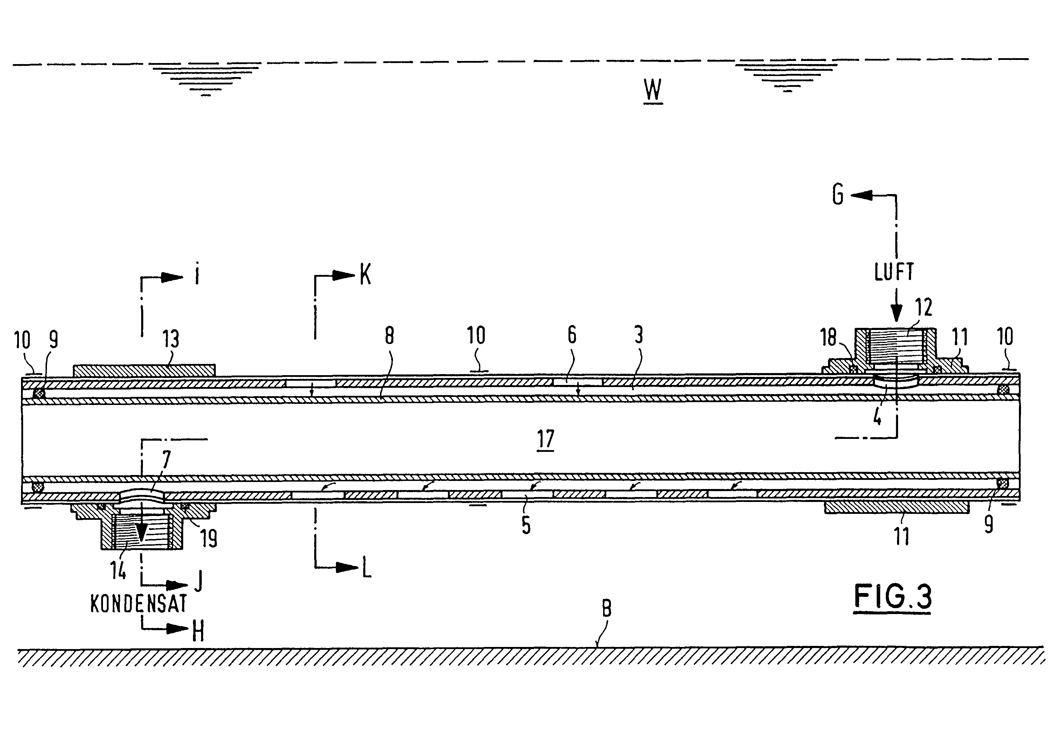

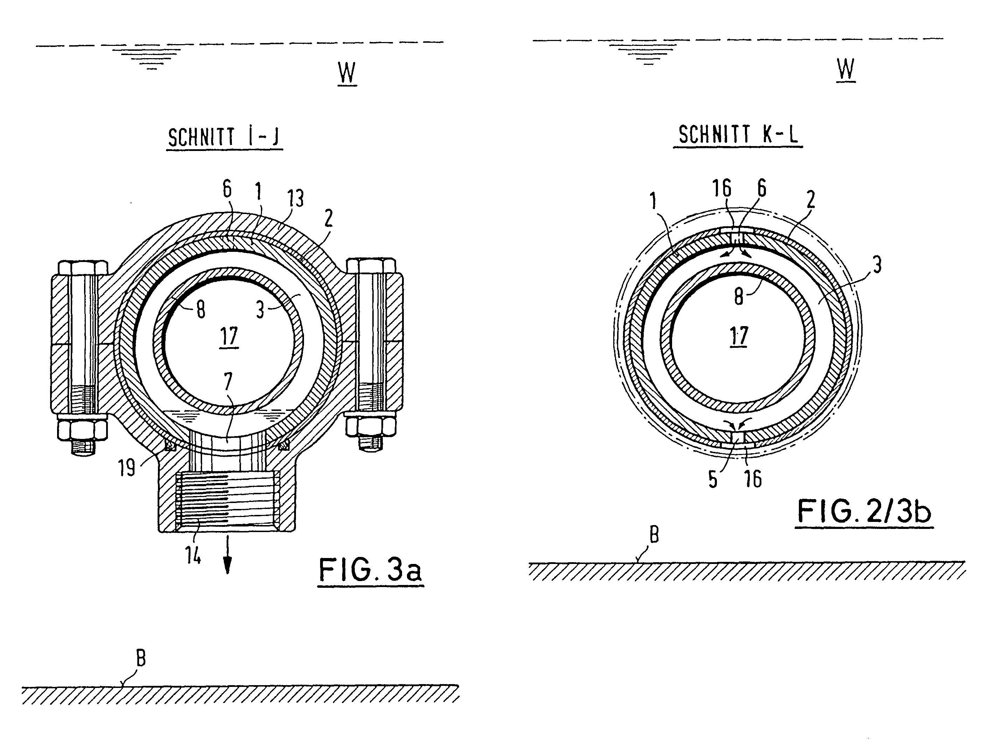

- Fig. 2/3b: einen Querschnitt der Begasungsvorrichtungen gemäß Fig. 2 bzw. Fig. 3 entlang der Schnittlinie K-L,

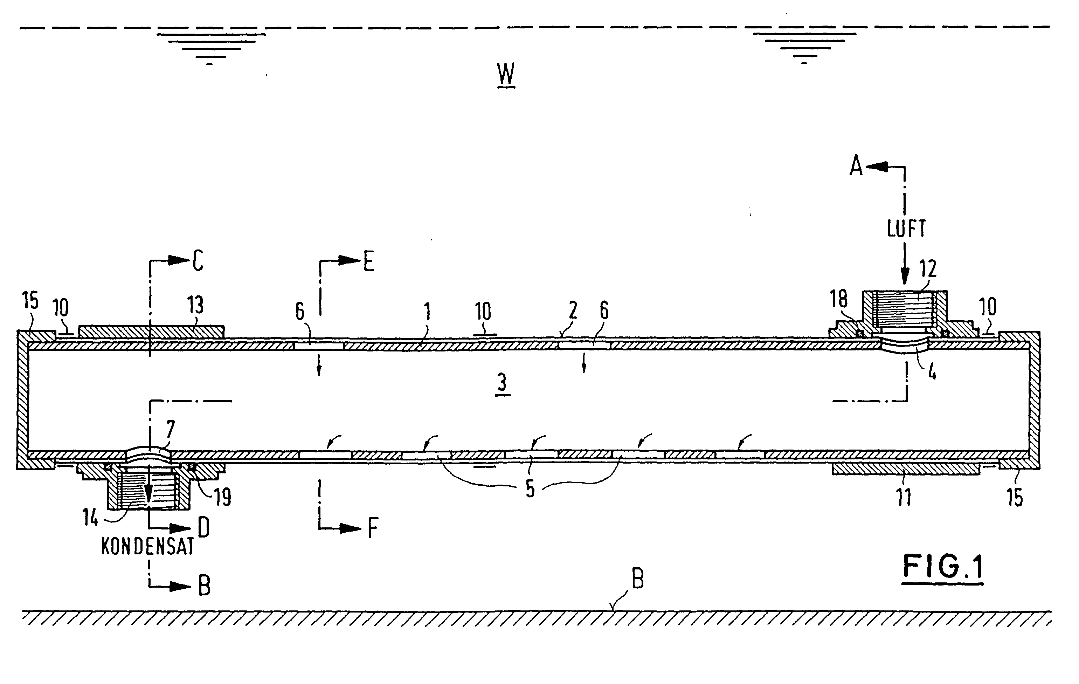

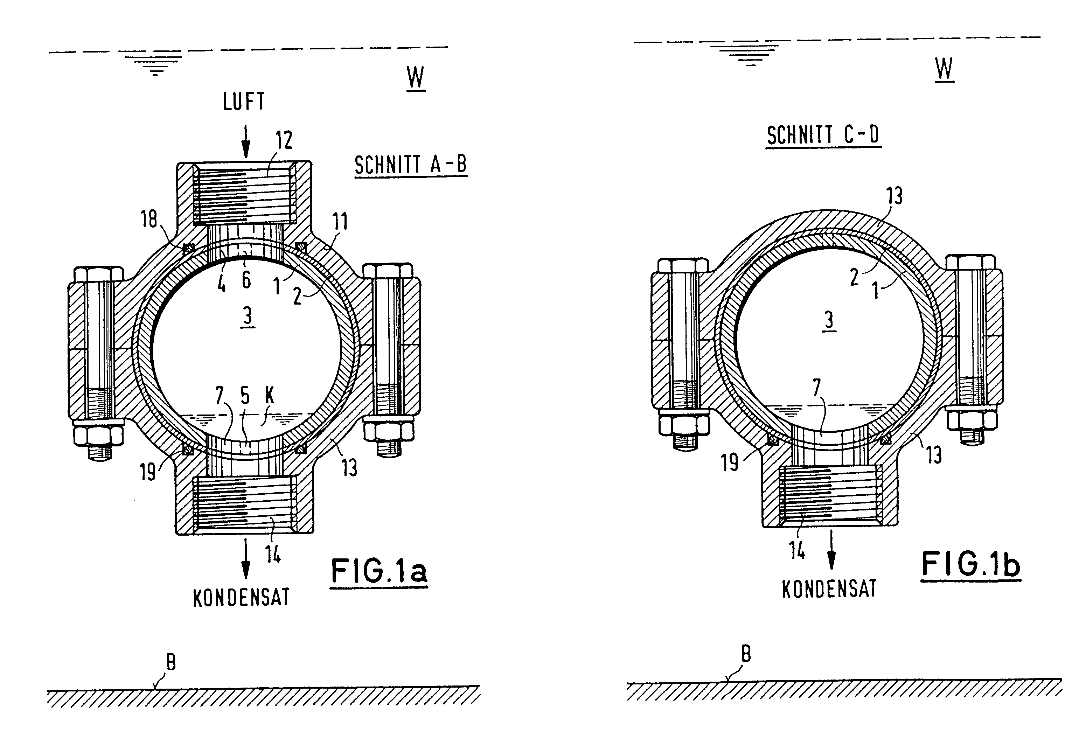

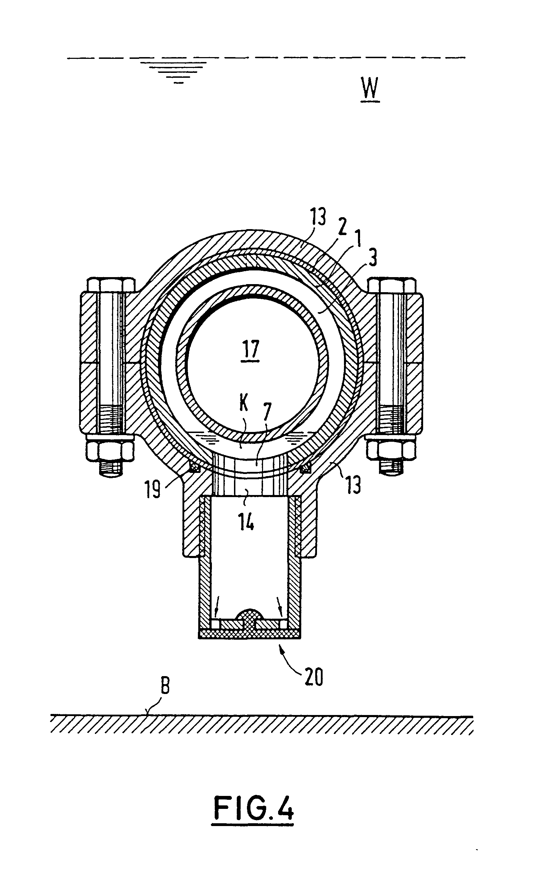

- Fig. 4: einen Querschnitt einer Begasungsvorrichtung gemäß einer weiteren Ausgestaltung der Erfindung entsprechend der Schnittlinie C-D in Fig. 1,

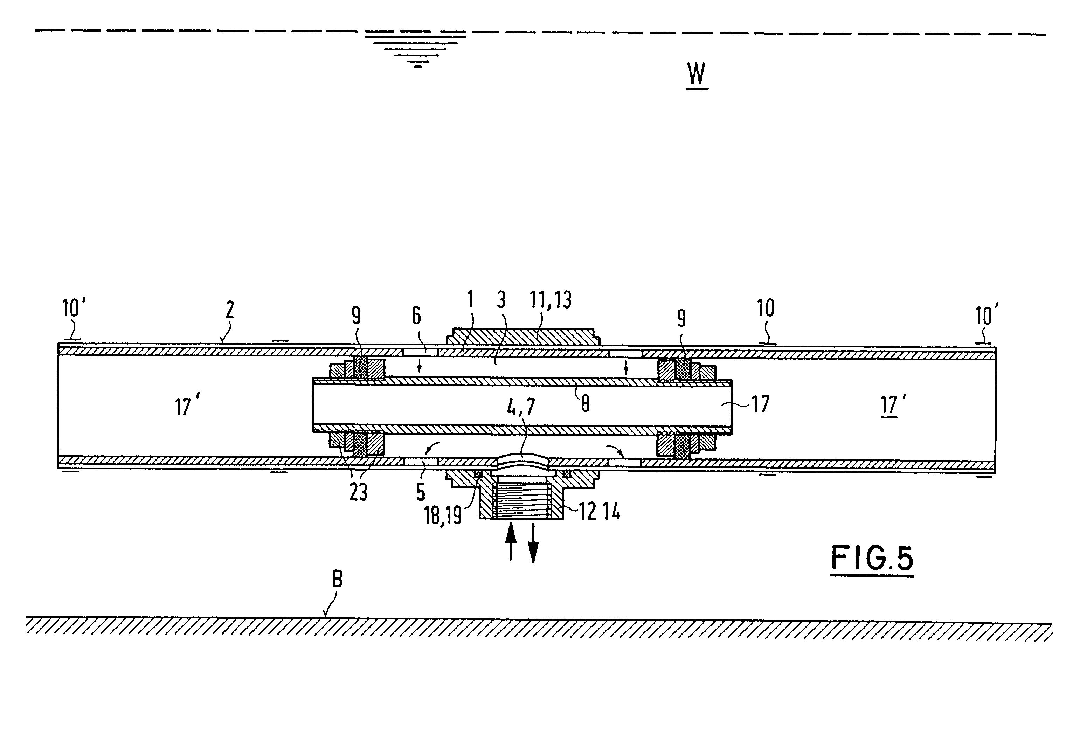

- Fig. 5 bis 7: drei weitere Ausgestaltungen der Erfindung im Längsschnitt,

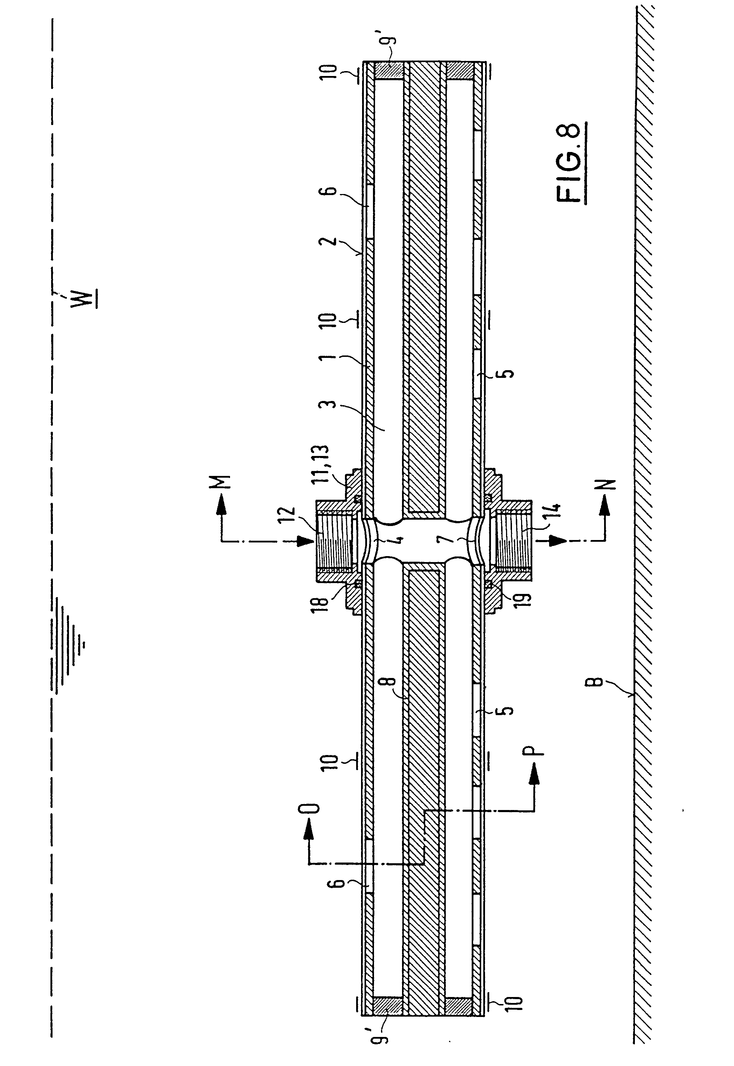

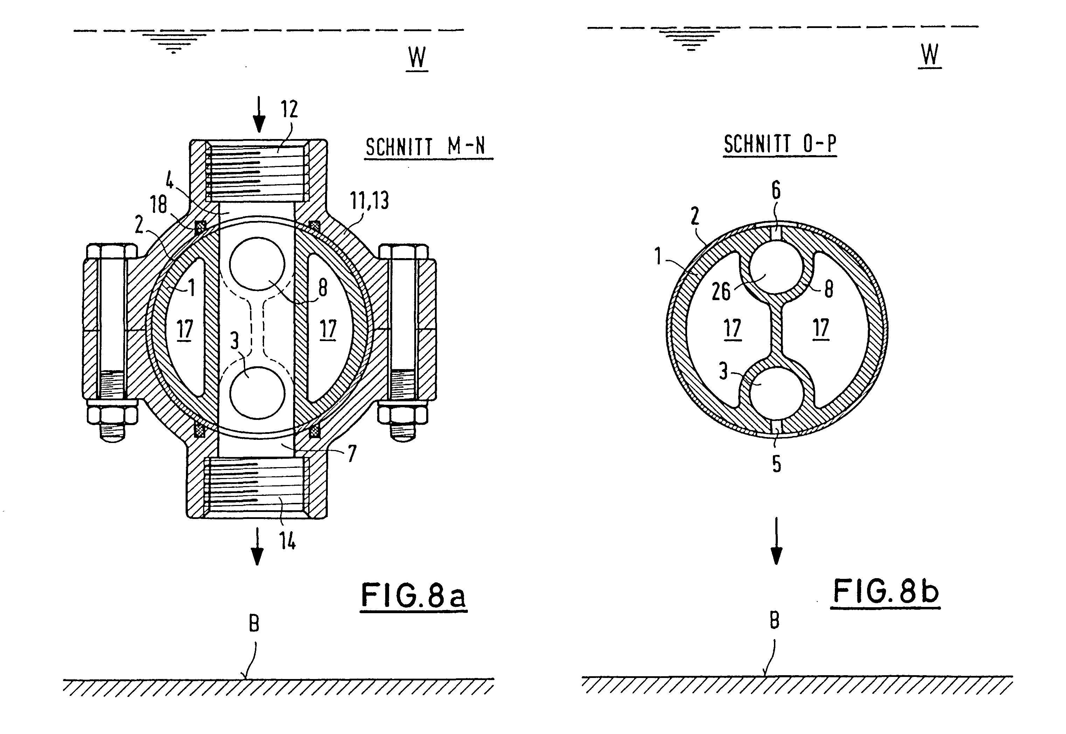

- Fig. 8: eine weitere Abwandlung der Begasungsvorrichtung von Fig. 2,
- Fig. 8 und 8a: eine Querschnittsdarstellung der Begasungsvor richtung von Fig. 8 entsprechend den Schnittlinien M-N bzw. O-P,

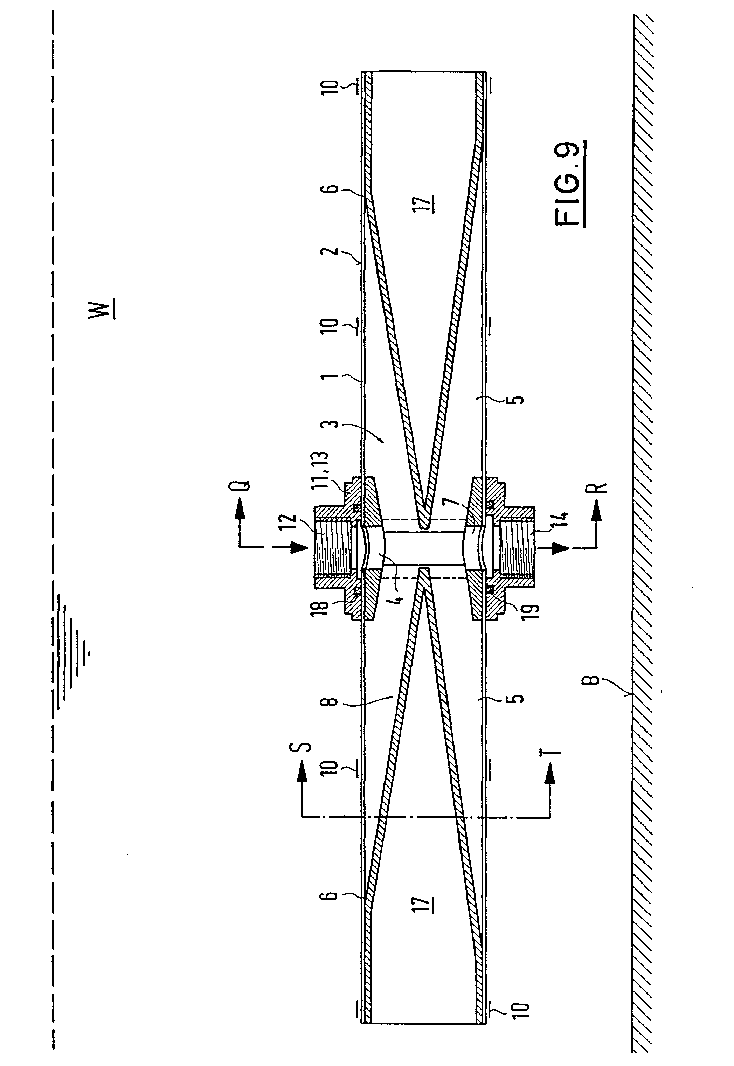

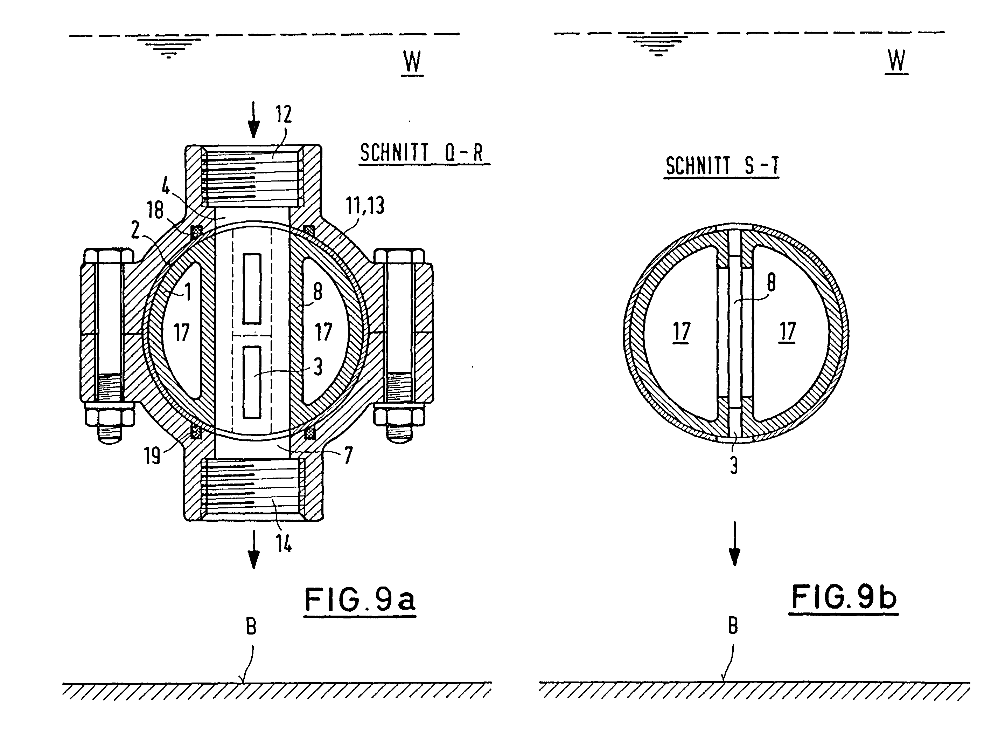

- Fig. 9: eine noch weitere Abwandlung der Begasungsvor richtung von Fig. 2, sowie
- Fig. 9a und 9b: eine Querschnittsdarstellung einer Begasungsvor richtung von Fig. 9 entsprechend den Schnittlinien Q-R bzw. S-T.

Die Begasungsvorrichtung gemäß Fig. 1, welche z.B. oberhalb des Bodens B im Abwasser W eines Abwasserbeckens angeordnet wird, hat einen als Verteilerrohr ausgebildeten Stützkörper 1 für eine diesen umgebende teilperforierte elastische Membran 2, welche im Nichtbetriebszustand den Stützkörper 1 eng umschließt, so daß keine Flüssigkeit in den von dem Stützkörper 1 umschlossenen Gasraum 3 eindringen kann, und welche im Betriebszustand, also bei Gasbeaufschlagung, von dem Stützkörper 1 jedenfalls bereichsweise abhebt, um den Austritt des Gases durch ihre Perforation in die Flüssigkeit W zu gestatten. Der Stützkörper 1 ist an seinen Enden mit Kappen 15 verschlossen. Statt dessen kann der Stützkörper 1 an beiden Enden auch durch eine Anzahl von Teilstücken über entsprechende Kopplungselemente verlängert werden, um an die Abmessung des entsprechenden Abwasserbassins angepaßt zu werden. Selbstverständlich kann eine Anzahl derartiger langgestreckter rohrförmiger Stützkörper 1 in Abständen verteilt z.B. parallel zueinander, aber auch in unterschiedlichen Ebenen quer zueinander in einem solchen Abwasserbecken angeordnet werden, um darin eine gleichmäßige Begasung zu erzielen.

Der Stützkörper 1 hat in der Nähe seines einen Endes in seinem zylindrischen Mantel eine Gaszufuhröffnung 4, wobei die Membran 2 entsprechend ausgespart ist, um das Begasungsgas, im angegebenen Falle Luft, z.B. von einem angeschlossenen Zufuhrschlauch über einen Zufuhrstutzen 12 zuführen zu können. Der Zufuhrstutzen 12 ist mittels einer Schelle 11 auf dem Stützkörper 1 gehalten, wobei die Schelle 11 im Umfangsbereich des Zufuhrkanals des Zufuhrstutzens 12 mittels einer Ringdichtung 18 gegen die Membran 2 abgedichtet ist.

Während die Gaszufuhröffnung 4 in diesem Ausführungsbeispiel an oberster Stelle des Gasraumes 3 angeordnet ist (das Gas kann bei entsprechenden Anschlüssen z.B. auch stirnseitig oder von unten zugeführt werden), befindet sich an unterster Stelle des Gasraumes 3 und dem Bereich des gegenüberliegenden Endes des Stützrohres 2 in dem Mantel des Stützkörpers 1 eine Kondensataustrittsöffnung 7; letztere mündet in einen Ablaßstutzen 14, welcher mit einer Schelle 13 auf dem Stützkörper 1 gehalten und in dessen daran angeschlossene Ablaßleitung ein z.B. steuerbares Ventil vorgesehen ist, welches bei Begasungsbetrieb geschlossen ist. Auch hier ist die Schelle 13 im Umfangsbereich des Ablaßkanals des Ablaßstutzens 14 mittels einer Ringdichtung 19 gegen die Membran 2, welche hier eine entsprechende Aussparung für den Durchtritt des Kondensats K aufweist, abgedichtet.

Die Membran 2 ist mittels mehrerer über die Länge des Stützkörpers 1 verteilter flexibler Manschetten 10 auf dem Stützkörper 1 gehalten, während Halteschellen 10' an den beiden Enden des Stützkörpers 1 im wesentlichen fest angeordnet sind. Die dazwischenliegenden Manschetten 10 können nach Bedarf in ihrer axialen Position verstellt werden, um das Blasenbild der Begasungsvorrichtung zu verändern.

Das Stützrohr 1 hat ferner an unterster Stelle des Gasraumes 3 über seine Länge verteilt diverse Gasaustrittsöffnungen 5, wobei, wie insbesondere aus Fig. 1c ersichtlich, die Membran 2 im Bereich der Gasaustrittsöffnungen 5 nicht perforierte Bereiche 16 hat, damit die zu begasende Flüssigkeit W bei fehlender Gasbeaufschlagung nicht in den Gasraum 3 eintreten kann.

An oberster Stelle des Gasraumes 3 befinden sich ferner in dem Mantel des Stützkörpers 1 über die Länge des Stützkörpers 1 verteilte Kondensateintrittsöffnungen 6. Die Membran 2 hat, wie insbesondere aus Fig. 1c ersichtlich, auch im Bereich der Kondensateinlaßöffnung 6 nicht perforierte Bereiche 16, so daß die zu begasende Flüssigkeit W bei fehlendem Begasungsbetrieb ebenfalls nicht über die Perforation der Membran 2 und die Kondensateinlaßöffnung 6 in den Gasraum 3 eintreten kann.

Das sich während des Begasungsbetriebes in dem Zwischenraum zwischen dem Mantel des Stützkörpers 1 und der Membran 2 ansammelnde Kondensat K kann über die Kondensateinlaßöffnung 6 in den Gasraum 3 gelangen und sich, wie beispielsweise in Fig. 1a ersichtlich, am Boden des Gasraums 3 ansammeln. Das angesammelte Kondensat K kann dann ggf. unter Mitwirkung des Druckes des über die Gaszufuhröffnung 4 zugeführten Begasungsgases und nach Öffnen eines in der (nicht dargestellten) an den Ablaßstutzen 14 angeschlossenen Ableitung vorgesehenen beim Begasungsbetrieb geschlossenen Ablaßventil aus dem Gasraum 3 abgelassen werden. Es ist beispielsweise möglich, die Ablaßleitung bis über den Wasserspiegel hochzuführen und das Kondensat nach Öffnen des Ablaßventils mittels des Begasungsgases, wie Luft, auszubreiten.

Um dem Auftrieb der Begasungsvorrichtung bei Gasbeaufschlagung entgegenzuwirken, ist bei der Ausgestaltung gemäß Fig. 2 in dem Stützkörper 1 und koaxial zu diesem ein Flutraumbegrenzungsrohr 8 mit geschlossener Wandung vorgesehen, welches an seinen Enden mittels Dichtungen 9 gegen die Innenumfangsfläche des Stützkörpers 1 abgedichtet ist, so daß der somit kreisringförmige Gasraum 3 an seinen Enden geschlossen ist. Das Flutraumbegrenzungsrohr 8 ist dagegen an seinen Enden offen, so daß die zu begasende Flüssigkeit W ohne weiteres in den inneren Flutraum 17 eintreten und diesen ausfüllen kann. Das Flutraumbegrenzungsrohr 8 kann gegenüber dem Stützrohr 1 unterschiedliche Längen haben, so daß der Gasraum 3 relativ zu den inneren und äußeren Fluträumen 17, 17' an unterschiedliche Verhältnisse angepaßt werden kann.

Die Ausgestaltung der Begasungsvorrichtung gemäß Fig. 2 unterscheidet sich von der in Fig. 1 dargestellten ferner noch dadurch, daß sowohl die Gaszufuhröffnung 4 mit zugehörigem Zufuhrstutzen 12 als auch die Kondensataustrittsöffnung 7 mit zugehörigem Auslaßstutzen 14 in der Mitte des Stützkörpers 1 vorgesehen und von einer gemeinsamen Schelle 11, 13 gehalten sind. Es ist auch hier möglich, den Stützkörper 1 einschließlich Flutraumbegrenzungsrohr 8 in seiner Länge an die Abmessungen des zu beaufschlagenden Abwasserbeckens anzupassen oder mehrere gleichartige Stützkörper 1 und Flutraumbegrenzungsrohre 8 aneinanderzureihen und miteinander zu koppeln.

Die in Fig. 3 dargestellte Ausgestaltung einer erfindungsgemäßen Begasungsvorrichtung entspricht im wesentlichen derjenigen von Fig. 1 mit dem Unterschied, daß in dem Stützkörper 1 ein an seinen Enden gegenüber der Innenumfangsfläche des Stützkörpers 1 mittels Dichtungen 9 abgedichtetes Flutraumbegrenzungsrohr 8 vorgesehen ist, welches sich in diesem Fall über die gesamte Länge des Stützrohres 1 erstreckt.

Fig. 4 veranschaulicht einen Querschnitt einer anderen Begasungsvorrichtung im Bereich der Kondensataustrittsöffnung 7 des Stützkörpers 1, wobei in den Ablaßstutzen 14 ein flexibles Ablaßventil 20 eingeschraubt ist. Das flexible Ablaßventil 20 ist so ausgestaltet, daß es bei Überschreiten eines vorgegebenen Druckes öffnet und bei Unterschreiten eines vorgegebenen Druckes wieder schließt. Somit kann das sich am Boden des Gasraumes 3 ansammelnde Kondensat K periodisch ggf. unter Mitwirkung des Begasungsgasdruckes abgelassen werden.

Bei der Ausgestaltung gemäß Fig. 5 ist das Flutraumbegrenzungsrohr 8 an seinen Enden mit einem Außengewinde versehen, so daß durch Verstellen darauf verdrehbarer Gewindescheiben 23 die Länge des ringförmigen Gasraumes 3 relativ zu den inneren und äußeren Fluträumen 17, 17' verändert werden kann. Bei der Ausgestaltung von Fig. 5 sind ferner die Gaszufuhröffnung 4 und die Kondensataustrittsöffnung 7 auf der Unterseite des Stützkörpers 1 zusammengelegt und demzufolge ebenso der Zufuhrstutzen 12 und der Ablaßstutzen 14 sowie die beiden Schellen 11, 13. An den Stutzen 12, 14 schließen sich, mit den erforderlichen Ventilen versehen, die Zufuhrleitung für das Begasungsgas und die Ablaßleitung für das Kondensat an, so daß dem Stützkörper 1 wechselweise Begasungsgas zugeführt und aus ihm Kondensat abgelassen bzw. abgesaugt werden kann.

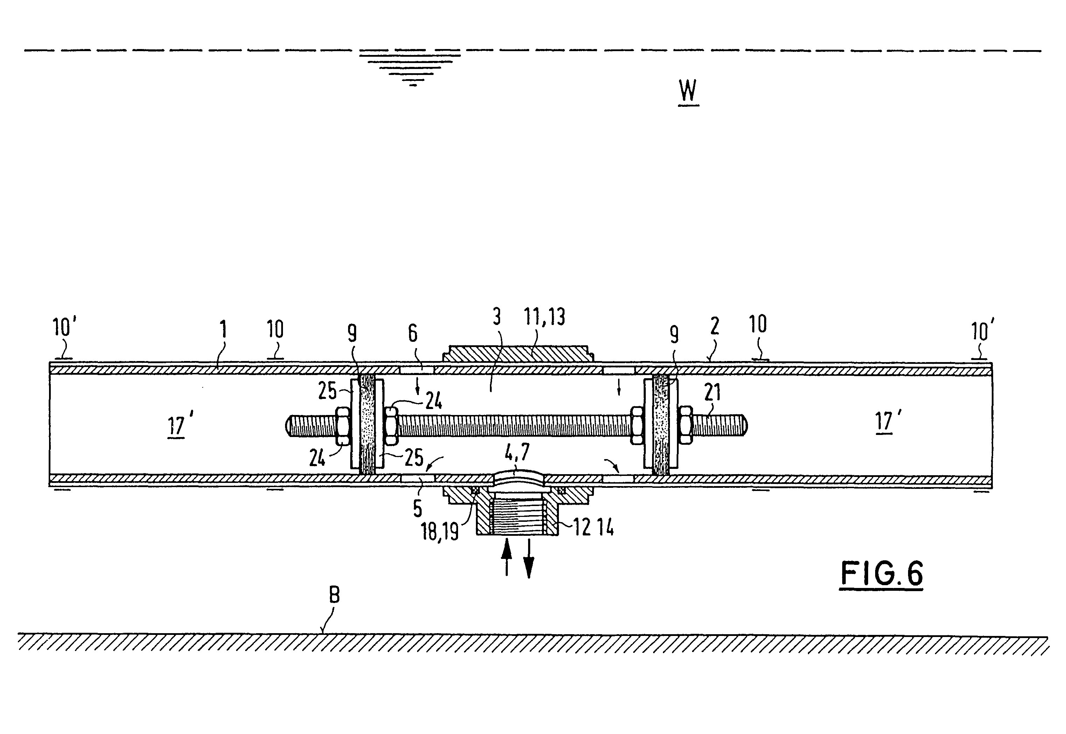

Bei der Ausführung gemäß Fig. 6 ist das Flutraumbegrenzungsrohr 8 von Fig. 5 durch eine koaxial in dem Stützrohr 1 angeordnete Gewindestange 21 ersetzt, auf welcher die ringscheibenförmigen Dichtungen 9 mit Hilfe von Muttern und Kontermuttern 24 sowie Abstützscheiben 25 axial verstellt werden können, um die Länge des in diesem Falle bis auf die Gewindestange 21 den gesamten Querschnitt des mittleren Teils des Stützkörpers 21 ausmachenden Gasraum 3 zu verändern.

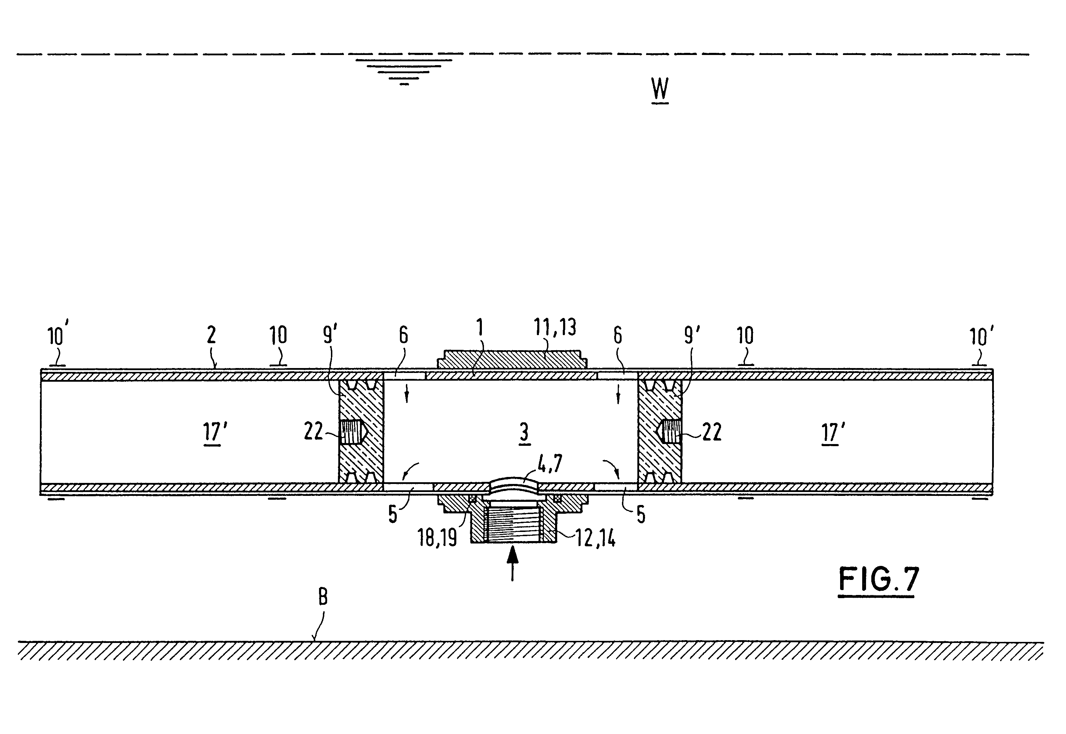

Die Ausführung gemäß Fig. 7 ist gegenüber der Ausführung von Fig. 6 nochmals dadurch vereinfacht, daß die Abdichtung des mittleren Gasraumes 3 gegenüber den äußeren Fluträumen 17' mit Hilfe von axial verstellbaren Gummistopfen 9' erfolgt, welche den gesamten Innenquerschnitt des Stützrohrs 1 ausfüllen. Die axiale Verstellung kann beispielsweise dadurch bewerkstelligt werden, daß in äußere axiale Gewindebohrungen 22 ein Betätigungsstab mit einem Gewindeende eingeschraubt wird, mithilfe dessen die Verschiebung der Gummistopfen 9' erfolgen kann.

Bei der Begasungsvorrichtung gemäß den Fig. 8 bis 8b verlaufen innerhalb des Stützrohres 1 ein kanalförmiger Gasraum 3 und ein kanalförmiger Kondensatsammelraum 26, welche mittels des diese umschließenden und über einen Steg miteinander verbundenen Flutraumbegrenzungsrohrs 8 von den über die gesamte Länge des Stützkörpers 1 verlaufenden Fluträumen 17 abgetrennt sind. Der kanalförmige Gasraum 3 und der kanalförmige Kondensatsammelraum 26 sind an ihren Enden mittels stopfenförmiger Dichtungen 9' geschlossen. Die Kondensateinlaßöffnungen 6 können, wie auch bei den anderen Ausführungen, geringeren Querschnitt haben, als die Gasaustrittsöffnungen 5.

Bei der alternativen Begasungsvorrichtung gemäß den Fig. 9 bis 9b ist im Vergleich zu der Ausführung gemäß Fig. 8 das Flutraumbegrenzungsrohr 8 so gestaltet, daß der kanalförmige Gasraum 3 und der kanalförmige Kondensatsammelraum 26 sich von der Mitte nach außen hin derart verjüngen, so daß sie an ihren Enden nicht gesondert verschlossen werden müssen.

### Bezugszeichenliste:

- 1: Stützkörper
- 2: Membran
- 3: Gasraum
- 4: Gaszufuhröffnung
- 5: Gasaustrittsöffnung
- 6: Kondensateinlaßöffnung
- 7: Kondensataustrittsöffnung
- 8: Flutraumbegrenzungsrohr
- 9: Dichtung
- 9': Gummistopfen
- 10: Manschetten
- 10': Halteschellen
- 11: Schelle
- 12: Zufuhrstutzen
- 13: Schelle
- 14: Ablaßstutzen
- 15: Kappen
- 16: nicht perforierte Bereiche
- 17: Flutraum
- 17': Flutraum
- 18: Ringdichtung
- 19: Ringdichtung
- 20: Ablaßventil
- 21: Gewindestange
- 22: Gewindebohrung
- 23: Gewindescheiben
- 24: Muttern, Kontermuttern
- 25: Abstützscheiben
- 26: Kondensatsammelraum

## Patentansprüche

1. Begasungsvorrichtung für das Zuführen von Gasen, wie Luft, in eine Flüssigkeit, insbesondere für die Behandlung von Abwasser, mit einem Verteilerrohr mit einem rohrförmigen Stützkörper (1) für eine diesen umgebende wenigstens teilweise perforierte elastische Membran (2), welche im Nichtbetriebszustand den Stützkörper (1) eng umschließt, so daß keine Flüssigkeit in den von dem Stützkörper (1) umschlossenen Gasraum (3) eindringen kann und welche im Betriebszustand von dem Stützkörper (1) jedenfalls bereichsweise abhebt, um den Austritt des Gases durch ihre Perforation in die Flüssigkeit zu gestatten, wobei das Verteilerrohr selbst als ein den Gasraum (3) umschließender, beliebig verlängerbarer Stützkörper (1) ausgebildet ist, eine Gaszufuhröffnung (4) und über wenigstens einen Teil seiner Länge verteilte Gasaustrittsöffnungen (5) aufweist, **dadurch gekennzeichnet, daß** der Stützkörper (1) mindestens eine Kondensataustrittsöffnung (7) und mindestens eine im oberen Drittel des Gasraums (3) angeordnete Kondensateinlaßöffnung (6) aufweist.

2. Vorrichtung nach Anspruch 1, **dadurch gekennzeichnet, daß** sich in dem Stützkörper (1) z.B. koaxial unter Bildung eines z.B. ringförmigen Gasraumes (3) ein, z.B. von einem flexiblen Schlauch gebildetes, Flutraumbegrenzungsrohr (8) befindet, welches einen gegenüber dem Gasraum (3) geschlossenen Mantel hat, z.B. an seinen Enden stirnseitig offen ist und z.B. an seinen Enden zum Einschluß des Gasraumes (3) zwischen dem Stützkörper (1) und dem Flutraumbegrenzungsrohr (8) eine Dichtung (9) vorgesehen ist.

3. Vorrichtung gemäß Anspruch 1 oder 2, **dadurch gekenn zeichnet,** daß die Länge des Gasraums (3) relativ zu einem Flutraum (17, 17') veränderbar ist.

4. Vorrichtung nach Anspruch 2 oder 3, **dadurch gekennzeichnet, daß** das Flutraumbegrenzungsrohr (8) nur über einen Teil der Länge des Stützkörpers (1) verläuft.

5. Vorrichtung nach einem der Ansprüche 2 bis 4 , **dadurch gekennzeichnet, daß** die Dichtungen (9) zwischen Stützkörper (1) und Flutraumbegrenzungsrohr (8) axial verstellbar sind.

6. Vorrichtung nach einem der vorhergehenden Ansprüche, **dadurch gekennzeichnet, daß** sich an den Gasraum (3), der einen mittleren Teil des Stützkörpers (1) einnimmt, äußere Fluträume (17') anschließen und der Gasraum (3) von den Fluträumen (17') durch axial verstellbare Dichtungen (9) abgetrennt sind.

7. Vorrichtung nach Anspruch 6, **dadurch gekennzeichnet, daß** die Dichtungen (9) auf einer axialen Gewindestange (21) gehalten sind.

8. Vorrichtung nach Anspruch 6 oder 7, **dadurch gekennzeichnet, daß** die Dichtungen (9) als Stopfen aus elastischem Material mit äußeren Gewindebohrungen (22) ausgebildet sind.

9. Vorrichtung nach Anspruch 1 oder 2, **dadurch gekennzeichnet, daß** die Membran (2) im Bereich der Kondensateinlaßöffnung (6) und der Gasaustrittsöffnungen (5) nicht perforiert ist.

10. Vorrichtung nach einem der vorhergehenden Ansprüche, **dadurch gekennzeichnet, daß** die Membran (2) mittels axial verstellbarer flexibler Manschetten (10) und an ihren Enden mittels festliegender Halteschellen (10') auf dem Stützkörper (1) gehalten ist.

11. Vorrichtung nach einem der vorhergehenden Ansprüche, **dadurch gekennzeichnet, dass** die Gasaustrittsöffnungen (5) mit der Gaszufuhröffnung (4) auf einer horizontalen Ebene liegen.

12. Vorrichtung nach einem der vorhergehenden Ansprüche, **dadurch gekennzeichnet, dass** die Gasaustrittsöffnungen (5) bis zu 180° zu den Kondensateinlassöffnungen (6) versetzt sind.

13. Vorrichtung nach einem der vorhergehenden Ansprüche, **dadurch gekennzeichnet, dass** die Gasaustrittsöffnungen (5) im unteren Drittel des Gasraumes (3) liegen.

14. Vorrichtung nach einem der vorhergehenden Ansprüche, **dadurch gekennzeichnet, dass** der Gasraum (3) von der Gaszufuhröffnung(4) zu dessen Enden hin in Längsrichtung bei konstanter Luftzufuhr mit konstanter oder abnehmender Gasgeschwindigkeit durchströmbar ist.

15. Vorrichtung nach einem der vorhergehenden Ansprüche, **dadurch gekennzeichnet, dass** Gaszufuhröffnung (4) und Kondensataustrittsöffnung (7) von ein und derselben Öffnung gebildet sind.

16. Vorrichtung nach einem der vorhergehenden Ansprüche, **dadurch gekennzeichnet, dass** der Gasraum (3) mit einer Gasgeschwindigkeit von 0 bis 50 m/s, vorzugsweise 10 bis 20 m/s, durchströmbar ist.

17. Vorrichtung nach einem der vorhergehenden Ansprüche, **dadurch gekennzeichnet, dass** das Kondensat mittels Druckluft oder Saugluft aus dem Gasraum (3) abführbar ist.

18. Vorrichtung nach einem der vorhergehenden Ansprüche, **dadurch gekennzeichnet, daß** der Gaszufuhröffnung (4) ein z.B. mittels einer Schelle (11) auf dem Stützrohr (1) gehaltener Zufuhrstutzen (12) zugeordnet ist.

19. Vorrichtung nach einem der vorhergehenden Ansprüche, **dadurch gekennzeichnet, daß** der Kondensataustrittsöffnung (7) ein z.B. mittels einer Schelle (13) auf dem Stützkörper (1) gehaltener Ablaßstutzen (14) zugeordnet ist.

20. Vorrichtung nach einem der vorhergehenden Ansprüche, **dadurch gekennzeichnet, daß** der Stützkörper (1) an seinen stirnseitigen Enden mittels Kappen (15) geschlossen ist.

21. Vorrichtung nach einem der vorhergehenden Ansprüche, **dadurch gekennzeichnet, daß** der Kondensataustrittsöffnung (7) ein unter Druck öffenbares Ablaßventil (18) nachgeschaltet ist.

## Claims

1. Aerator for the supply of gases such as air into a fluid, in particular for the treatment of waste water, with a distributor pipe with a tubular supporting body (1) for a surrounding, at least partially perforated elastic membrane (2) which closely surrounds the supporting body (1) in the inoperative state so that no fluid can penetrate the gas chamber (3) surrounded by the supporting body (1) and which in the operative state lifts in any case partly away from the supporting body (1) in order to allow the emergence of the gas through its perforations into the fluid, where the distributor pipe itself is formed as a supporting body (1) surrounding the gas chamber (3) and extendable as required, has a gas supply opening (4) and gas outlet openings (5) distributed over at least part of its length, **characterised in that** the supporting body (1) has at least one condensate outlet opening (7) and at least one condensate inlet opening (6) arranged in the upper third of the gas chamber (3).

2. Device according to claim 1, **characterised in that** in the supporting body (1), e.g. coaxial under formation of an e.g. annular gas chamber (3), is a flood chamber delimiting tube (8) made e.g. from a flexible hose, which tube has a casing closed to the gas chamber (3), e.g. open at its ends and e.g. at its ends is provided a seal (9) for containment of the gas chamber (3) between the supporting body (1) and the flood chamber delimiting tube (8).

3. Device according to claim 1 or 2, **characterised in that** the length of the gas chamber (3) can be modified relative to an flood chamber (17, 17').

4. Device according to claim 2 or 3, **characterised in that** the flood chamber delimiting tube (8) runs only over part of the length of the supporting body (1).

5. Device according to any of claims 2 to 4, **characterised in that** the seals (9) between the supporting body (1) and the flood chamber delimiting tube (8) are axially adjustable.

6. Device according to any of the previous claims, **characterised in that** external flood chambers (17') connect to the gas chamber (3), which takes in the centre part of the supporting body (1), and the gas chamber (3) is separated from the flood chambers (17') by axially adjustable seals (9).

7. Device according to claim 6, **characterised in that** the seals (9) are held on an axial threaded rod (21).

8. Device according to claim 6 or 7, **characterised in that** the seals (9) are formed as stoppers of elastic material with external threaded bores (22).

9. Device according to claim 1 or 2, **characterised in that** the membrane (2) is not perforated in the area of the condensate inlet opening (6) and the gas outlet openings (5).

10. Device according to any of the previous claims, **characterised in that** the membrane (2) is held on the supporting body (1) by means of axially adjustable flexible sleeves (10) and at their ends by means of fixed retaining clamps (10').

11. Device according to any of the previous claims, **characterised in that** the gas outlet openings (5) lie on a horizontal plane with the gas supply opening (4).

12. Device according to any of the previous claims, **characterised in that** the gas outlet openings (5) are offset by up to 180° to the condensate inlet openings (6).

13. Device according to any of the previous claims, **characterised in that** the gas outlet openings (5) lie in the lower third of the gas chamber (3).

14. Device according to any of the previous claims, **characterised in that** through the gas chamber (3) from the gas supply opening (4) to its ends in the longitudinal direction, with a constant air supply gas can flow with constant or decreasing speed.

15. Device according to any of the previous claims, **characterised in that** the gas supply opening (4) and condensate outlet opening (7) are formed by one and the same opening.

16. Device according to any of the previous claims, **characterised in that** the gas can flow through the gas chamber (3) at a speed of 0 to 50 m/s, preferably 10 to 20 m/s.

17. Device according to any of the previous claims, **characterised in that** the condensate can be evacuated from the gas chamber (3) by means of compressed air or suction.

18. Device according to any of the previous claims, **characterised in that** a supply connector (12) is allocated to the gas supply opening (4) and held on the supporting pipe (1) e.g. by means of a clamp (11).

19. Device according to any of the previous claims, **characterised in that** an outflow connector (14) is allocated to the condensate outlet opening (7) and held on the supporting body (1) e.g. by means of a clamp (13).

20. Device according to any of the previous claims, **characterised in that** the supporting body (1) is closed at its ends by means of caps (15).

21. Device according to any of the previous claims, **characterised in that** after the condensate outlet opening (7) is connected an outflow valve (18) openable under pressure.

## Revendications

1. Dispositif de gazage pour l'introduction de gaz tel que l'air dans un liquide, notamment pour le traitement des eaux usées, comprenant un tube distributeur constitué d'un support tubulaire (1) pour une membrane (2) élastique entourant celui-ci et perforée au moins en partie, qui, lorsque le dispositif ne fonctionne pas, enserre étroitement le support (1) de sorte qu'aucun liquide ne peut pénétrer dans le compartiment des gaz (3) entouré par le support (1) et qui, lorsque le dispositif fonctionne, se détache au moins en partie du support (1) pour permettre le passage des gaz dans le liquide par ses perforations, le tube distributeur étant lui-même exécuté sous forme de support (1) extensible à volonté, qui entoure le compartiment des gaz (3) et présente un orifice d'admission des gaz (4) et des orifices de sortie des gaz (5) répartis sur au moins une partie de sa longueur, **caractérisé en ce que** le support (1) présente au moins un orifice d'évacuation des condensats (7) et au moins un orifice d'admission des condensats (6) disposé dans le tiers supérieur du compartiment des gaz (3).

2. Dispositif selon la revendication 1, **caractérisé en ce que** le support (1) comporte un tube de limitation du compartiment de remplissage (8), formé par exemple d'un tuyau souple et disposé par exemple coaxialement dans le support (1) en formant un compartiment des gaz (3) par exemple tubulaire, qui présente une enveloppe fermée par rapport au compartiment des gaz (3), est ouvert par exemple à ses extrémités frontales et comporte, par exemple à ses extrémités, un joint (9) placé entre le support (1) et le tube de limitation du compartiment de remplissage (8) pour fermer le compartiment des gaz (3).

3. Dispositif selon la revendication 1 ou 2, **caractérisé en ce que** la longueur du compartiment des gaz (3) est modifiable par rapport à un compartiment de remplissage (17, 17').

4. Dispositif selon la revendication 2 ou 3, **caractérisé en ce que** le tube de limitation du compartiment de remplissage (8) ne s'étend que sur une partie de la longueur du support (1).

5. Dispositif selon l'une des revendications 2 à 4, **caractérisé en ce que** les joints (9) placés entre le support (1) et le tube de limitation du compartiment de remplissage (8) sont réglables axialement.

6. Dispositif selon l'une des revendications précédentes, **caractérisé en ce que** des compartiments de remplissage externes (17') sont reliés au compartiment des gaz (3), qui occupe une partie médiane du support (1), et **en ce que** le compartiment des gaz (3) est séparé des compartiments de remplissage (17') par des joints (9) réglables axialement.

7. Dispositif selon la revendication 6, **caractérisé en ce que** les joints (9) sont maintenus sur une tige filetée axiale (21).

8. Dispositif selon la revendication 6 ou 7, **caractérisé en ce que** les joints (9) sont réalisés sous forme de bouchons en matériau élastique comportant des trous taraudés (22) externes.

9. Dispositif selon la revendication 1 ou 2, **caractérisé en ce que** la membrane (2) n'est pas perforée dans la zone de l'orifice d'admission des condensats (6) et des orifices de sortie des gaz (5).

10. Dispositif selon l'une des revendications précédentes, **caractérisé en ce que** la membrane (2) est maintenue sur le support (1) par des manchettes (10) souples réglables axialement et, à ses extrémités, par des brides de fixation (10') inamovibles.

11. Dispositif selon l'une des revendications précédentes, **caractérisé en ce que** les orifices de sortie des gaz (5) se situent sur un plan horizontal avec l'orifice d'admission des gaz (4).

12. Dispositif selon l'une des revendications précédentes, **caractérisé en ce que** les orifices de sortie des gaz (5) sont décalés jusqu'à 180° par rapport aux orifices d'admission des condensats (6).

13. Dispositif selon l'une des revendications précédentes, **caractérisé en ce que** les orifices de sortie des gaz (5) se situent dans le tiers inférieur du compartiment des gaz (3).

14. Dispositif selon l'une des revendications précédentes, **caractérisé en ce que** le compartiment des gaz (3) peut être traversé depuis l'orifice d'admission des gaz (4) jusqu'à ses extrémités, dans le sens longitudinal, avec un apport d'air constant, à une vitesse de gaz constante ou décroissante.

15. Dispositif selon l'une des revendications précédentes, **caractérisé en ce que** l'orifice d'admission des gaz (4) et l'orifice d'évacuation des condensats (7) forment un seul et même orifice.

16. Dispositif selon l'une des revendications précédentes, **caractérisé en ce que** les gaz peuvent traverser le compartiment des gaz (3) à une vitesse de 0 à 50 m/s, de préférence à une vitesse de 10 à 20 m/s.

17. Dispositif selon l'une des revendications précédentes, **caractérisé en ce que** le condensat peut être évacué du compartiment des gaz (3) au moyen d'air comprimé ou d'ai aspiré.

18. Dispositif selon l'une des revendications précédentes, **caractérisé en ce que** l'orifice d'admission des gaz (4) est associé à une tubulure d'admission (12) maintenue sur le support (1) par exemple à l'aide d'une bride (11).

19. Dispositif selon l'une des revendications précédentes, **caractérisé en ce que** l'orifice d'évacuation des condensats (7) est associé à une tubulure d'évacuation (14) maintenue sur le support (1) par exemple à l'aide d'une bride (13).

20. Dispositif selon l'une des revendications précédentes, **caractérisé en ce que** le support (1) est fermé à ses extrémités frontales par des capuchons (15).

21. Dispositif selon l'une des revendications précédentes, **caractérisé en ce qu'**une soupape de décharge (18) s'ouvrant sous la pression est placée en aval de l'orifice d'évacuation des condensats (7).
